# EUROPEAN PATENT APPLICATION

(11) **EP 2 526 786 A1**
(43) Date of publication of application: **28.11.2012**
(21) Application number: 12158504.6
(22) Date of filing: 07.03.2012
(51) Int. Cl.: A23N 7/02, A23N 12/02

(54) **A cleaning and/or drying apparatus**

(30) Priority: 23.05.2011 GB 201108592
(71) Applicant: Tickhill Engineering Company Limited, Armthorpe, Doncaster, South Yorkshire DN3 3EE (GB)
(72) Inventor: Haith, Nigel, Doncaster, South Yorkshire DN9 2BN (GB); Haith, David, Bawtry, South Yorkshire DN10 6NQ (GB)
(74) Representative: Sessford, Russell

(57) **Abstract**

A cleaning and/or drying apparatus for vegetables or other articles, the apparatus comprising: a main body; a barrel rotatably mounted with respect to the main body and defining a bore therethrough for the receipt of one or more articles to be cleaned and/or dried; a first roller motor mounted to the barrel and configured to be carried by the barrel; and a first roller rotatably mounted with respect to the barrel and carried by the barrel, the first roller being coupled to the first roller motor, such that the first roller is rotatably driveable with respect to the barrel by the first roller motor, the first roller being positioned with respect to the bore of the barrel such that the roller is operable to clean and/or dry one or more articles passing through the bore defined by the barrel.

## Description

Embodiments of the present invention relate to a cleaning and/or drying apparatus. Embodiments of the present invention relate to vegetable washers and/or polishers. In particular, embodiments of the present invention are directed to root vegetable polishers. Embodiments of the present invention also relate to cleaning and/or drying apparatus for other articles including, but not limited to, plastic, glass and metal articles - for example as part of a recycling process.

When vegetables are harvested they are typically contaminated with soil and debris from the environment in which they have been harvested or grown. In addition, the vegetables may include minor surface imperfections or undesired features - for example, fine roots, and the like. This is especially the case for root vegetables which are grown underground and hence may include a comparatively large level of soil contamination.

In order to improve the appearance of the vegetables to potential purchasers and also in order to remove contaminants which may be undesired, a health risk, or may affect the taste of the vegetables, it is know to wash and polish the vegetables.

Washing and polishing machines have been developed for use in the agricultural industry to allow relatively large quantities of vegetables to be processed in a batch or substantially continuous manner.

A conventional vegetable polisher comprises a feed chute at a first end of a main body of the polisher. The feed chute is configured to receive vegetables to be processed and to direct (i.e. feed) the vegetables into a bore defined by the barrel of the polisher. The barrel has a longitudinal axis and extends along a length of the main body of the polisher from the feed chute at the first end of the main body to an output chute at a second end of the main body. Within the bore of the barrel is a plurality of brushes. Each brush is mounted on a roller which extends along substantially an entire length of the bore of the barrel. Each roller has a longitudinal axis and the longitudinal axes of the bore the each roller are generally parallel to each other. The rollers are mounted around a periphery of the bore of the barrel and are rotatable with respect to the barrel. Furthermore, the barrel is rotatable with respect to the main body of the polisher.

The longitudinal axes of the barrel and the rollers are preferable inclined such that, when the polisher is positioned on a level floor surface (a susbstantially horizontal surface) vegetables which are feed through the feed chute tend to travel towards the output chute under the effect of gravity. The degree of inclination may be adjustable. Furthermore, a fluid spray (usually a water spray) arrangement may be provided which both acts to help the polishing process and to direct the vegetables down the feed chute.

A driving arrangement is provided to drive rotational movement of the rollers (and hence the brushes) with respect to the barrel and to drive rotational movement of the barrel with respect to the main body of the polisher.

The driving arrangement normally comprises belts and pulleys which are configured to drive rotation of the rollers in unison.

Therefore, it is not possible to drive the rollers independently of the barrel or to drive different rollers at different rotational speeds (without a complicated process of changing the pulleys associated with the rollers). Furthermore, the soil, grit, and other contaminants from the vegetables which are removed by the polisher can accumulate around the belts and pulleys. This can cause excessive wear to the belts which, therefore, must be maintained and replaced at intervals.

Articles, such as waste plastic and/or metal and/or glass, are often recycled so that the materials from which the articles are formed can be re-used. Such recycling processes often require the articles to be substantially clean and free from foreign contaminants. As such, there is also need to clean such articles and the apparatus used to clean and articles typically suffers from similar problems to those discussed above.

Once articles have been cleaned, then drying of the articles is often required. This conventionally requires the use of a separate drying apparatus.

The present invention seeks to ameliorate one or more problems associated with the prior art.

Accordingly, an aspect of the present invention provides a cleaning and/or drying apparatus for vegetables or other articles, the apparatus comprising: a main body; a barrel rotatably mounted with respect to the main body and defining a bore therethrough for the receipt of one or more articles to be cleaned and/or dried; a first roller motor mounted to the barrel and configured to be carried by the barrel; and a first roller rotatably mounted with respect to the barrel and carried by the barrel, the first roller being coupled to the first roller motor, such that the first roller is rotatably driveable with respect to the barrel by the first roller motor, the first roller being positioned with respect to the bore of the barrel such that the roller is operable to clean and/or dry one or more articles received by the bore defined by the barrel.

Another aspect of the present invention provides, a cleaning and/or drying apparatus for vegetables or other articles, the apparatus comprising: a main body; a barrel rotatably mounted with respect to the main body and defining a bore therethrough for the receipt of one or more articles to be cleaned and/or dried; a first roller motor mounted to the barrel and configured to be carried by the barrel; and a first roller rotatably mounted with respect to the barrel and carried by the barrel, the first roller being removably coupled to the first roller motor, such that the first roller is rotatably driveable with respect to the barrel by the first roller motor, the first roller being positioned with respect to the bore of the barrel such that the roller is operable to clean and/or dry one or more articles received by the bore defined by the barrel.

The apparatus may further comprise one or more further roller motors mounted to the barrel and configured to be carried by the barrel, and one or more further rollers, wherein the or each further roller motor is coupled to one or more of the further rollers and configured to drive rotational movement of the one or more further rollers with respect to the barrel.

At least one of the further roller motors may be controllable independently of the first roller motor to drive movement of the or each further roller coupled to the at least one further roller motor at a different rotational speed and/or in a different direction of rotation to the rotational speed and/or direction of rotation of the first roller.

The apparatus may further comprise a barrel drive motor configured to drive rotational movement of the barrel with respect to the main body.

The or each roller motor may be controllable independently of the barrel drive motor.

The barrel drive motor may be connected to a barrel drive shaft and the barrel drive shaft is configured to transfer rotational movement from the barrel drive motor to the barrel.

The barrel drive shaft may be moveable between at least two positions with respect to the main body, and the barrel may be suspended from the barrel driveshaft.

The apparatus may further comprise a slip ring arrangement to deliver electrical power to the or each roller motor from a power source.

The slip ring arrangement may be secured to the main body by a variable mounting arrangement such that the position of the slip ring arrangement with respect to the main body is variable.

The apparatus may further comprise a fluid delivery arrangement to deliver fluid under pressure to the or each roller motor from a fluid source.

The fluid delivery arrangement may be secured to the main body by a variable mounting arrangement such that the position of the fluid delivery arrangement with respect to the main body.

The apparatus may further comprise a fluid delivery arrangement configured to deliver fluid to the bore of the barrel.

The or each roller may have a longitudinal axis which is substantially parallel to a longitudinal axis of the barrel.

The apparatus may further comprise a roller bearing and sealing arrangement configured to mount the first roller to a part of barrel, the roller bearing and sealing arrangement being configured to receive a part of the roller.

The roller bearing and sealing arrangement may comprise a bellows-type seal.

The apparatus may further comprise a press roller which is mounted with respect to the barrel and carried by the barrel, the press roller being in contact with the first roller such that water from the first roller is transferable, during use, to the press roller.

The press roller may be rotatably mounted with respect to the barrel.

The apparatus may further comprise a scraper carried by the barrel and mounted to contact at least part of the press roller, the scrapper being configured to aid in the extraction of water from the press roller.

Aspects of embodiments of the present invention are described herein, by way of example only, with reference to the accompanying drawings in which:
Figure 1 shows an apparatus according to an embodiment;
Figure 2 shows a first end of the apparatus of an embodiment;
Figure 3 shows a second end of the apparatus of an embodiment;
Figure 4 shows a side view of an apparatus according to an embodiment;
Figure 5 shows a second end of a barrel of an embodiment;
Figure 6 shows a barrel of an embodiment;
Figure 7 shows a first end of a barrel of an embodiment;
Figure 8 shows a saddle arrangement of an embodiment;
Figure 9 shows the coupling of a roller to a shaft member according to an embodiment;
Figure 10 shows a roller seal lock arrangement according to an embodiment;
Figure 11 shows a roller bearing and sealing member according to an embodiment;
Figure 12 shows a cross-sectional side view of an apparatus of an embodiment;
Figure 13 shows a first end of an apparatus of an embodiment;
Figure 14 shows a second end of an apparatus of an embodiment;
Figure 15 shows a cross-sectional view of a coupling of a roller motor to a roller of an embodiment;
Figure 16 shows a cross-sectional view of a slip ring arrangement of an embodiment;
Figure 17 shows coupling components of an embodiment;
Figure 18 shows a slip ring arrangement of an embodiment;
Figure 19 shows a barrel drive shaft of an embodiment;
Figure 20 shows a view of an end of an embodiment;
Figure 21 shows a view down a bore of a barrel of an embodiment;
Figure 22 shows a roller bearing and sealing member according to an embodiment;
Figure 23 shows a roller of an embodiment;
Figure 24 shows aspects of a drying roller arrangement of an embodiment.

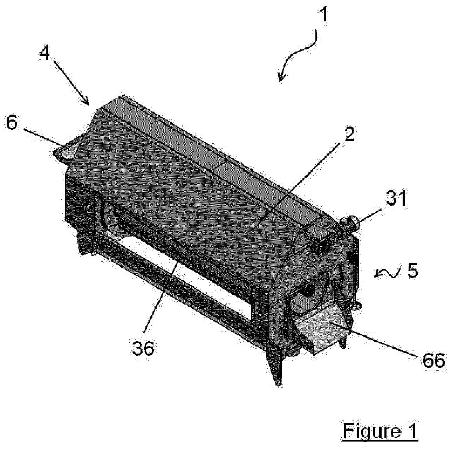

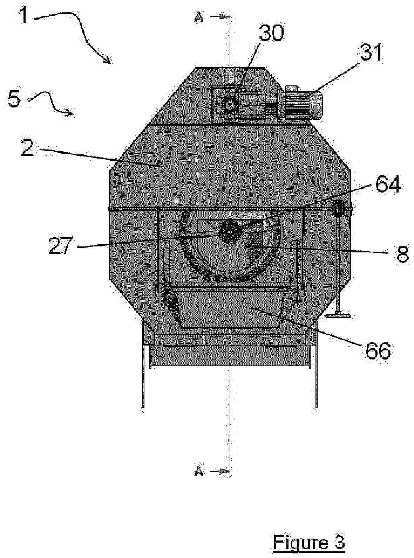

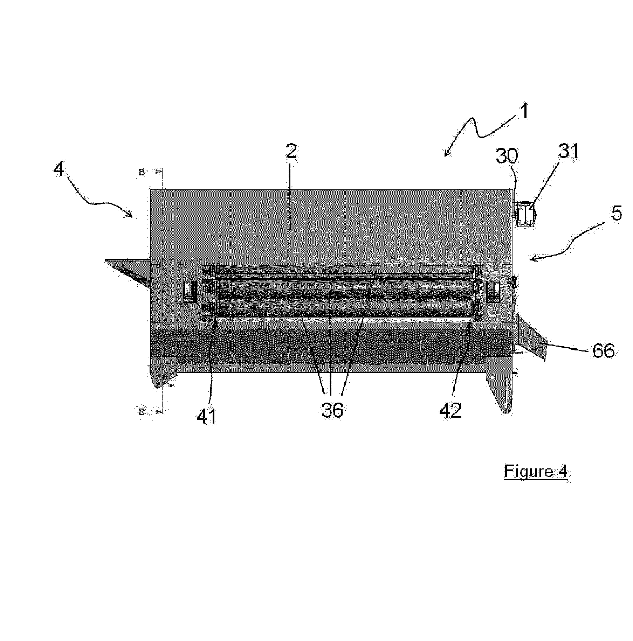

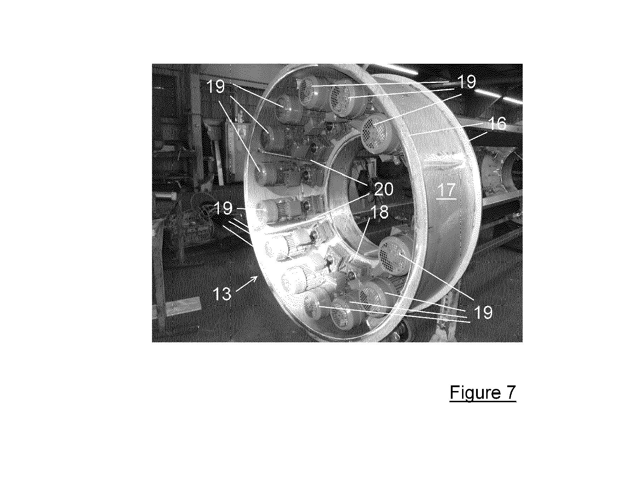

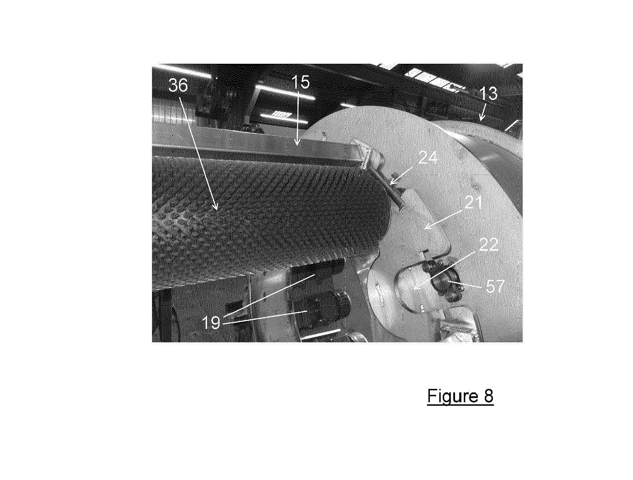

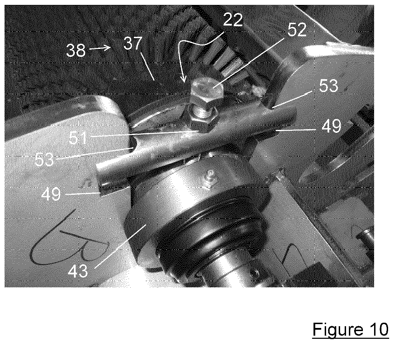

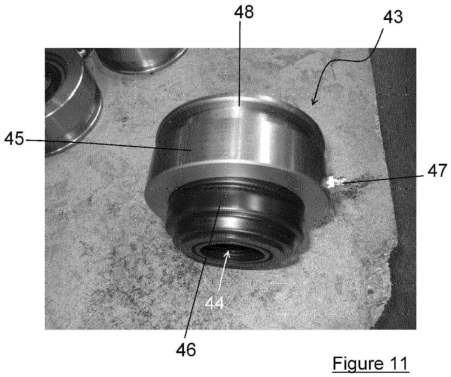

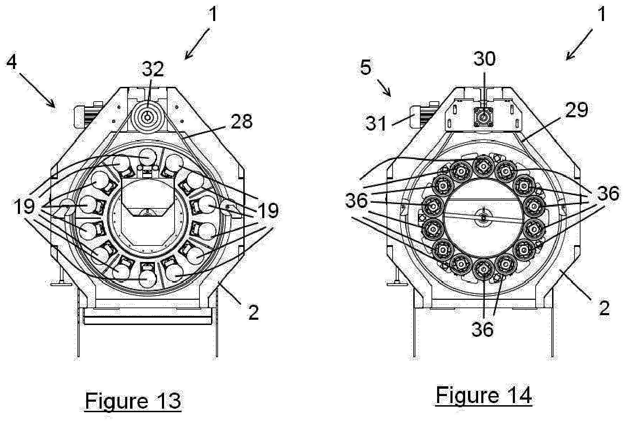

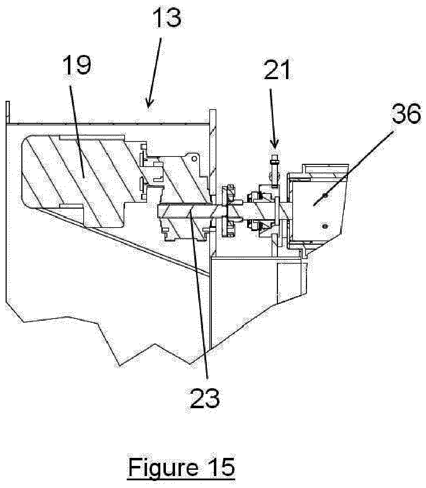

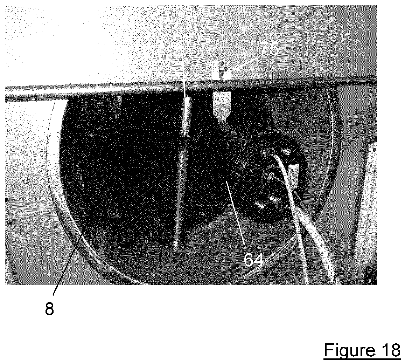

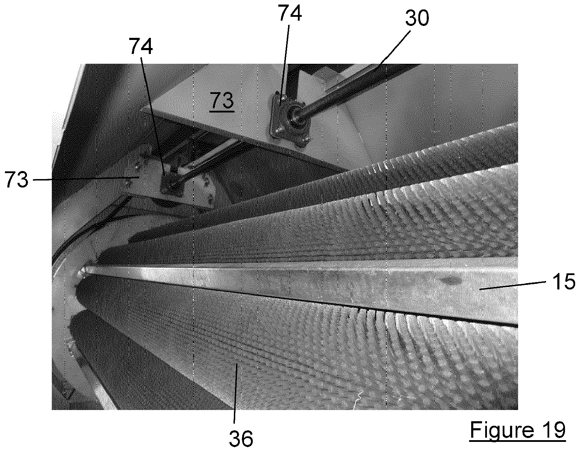

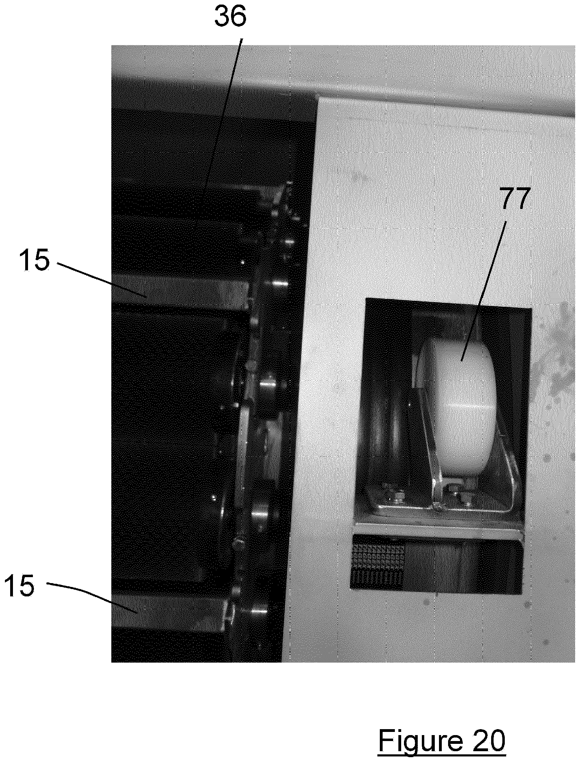

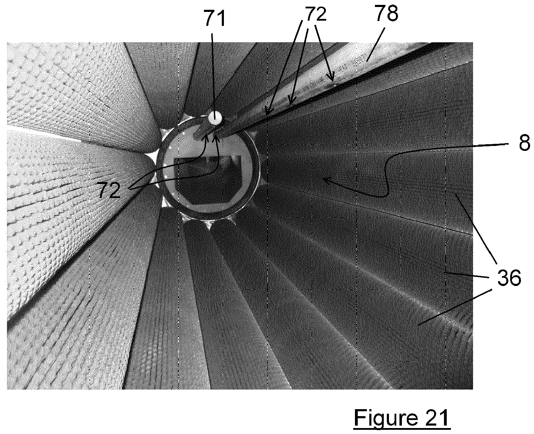

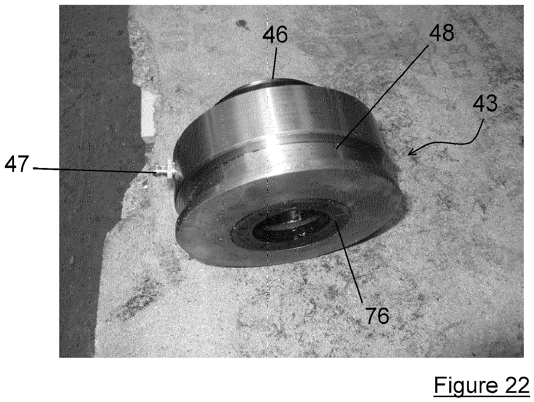

With reference to figures 1 to 22, an embodiment of the present invention includes a cleaning apparatus 1. This apparatus 1 may be configured to clean vegetables or other food products or articles - such as shellfish and like. References herein to vegetables are by way of example only. Furthermore, it will be understood that references to root vegetables are merely examples of a products or articles which embodiments of the present invention may be configured to clean. For example, embodiments may be configured to clean metal and/or plastic and/or glass articles or products. Such a cleaning process may be part of a recycling process through which the articles or products can be re-used, or the material from which the articles or products are formed can be re-formed into new articles or products.

The cleaning apparatus 1 comprises a main body 2 which is configured to be mounted on a ground engaging arrangement.

The ground engaging arrangement is configured to support the main body 2 of the cleaning apparatus 1 with respect to, for example, a ground surface. The ground engaging arrangement may comprise a plurality of legs.

The main body 2 is elongate having a first end 4 and a second end 5 which oppose each other across a length of the main body 2.

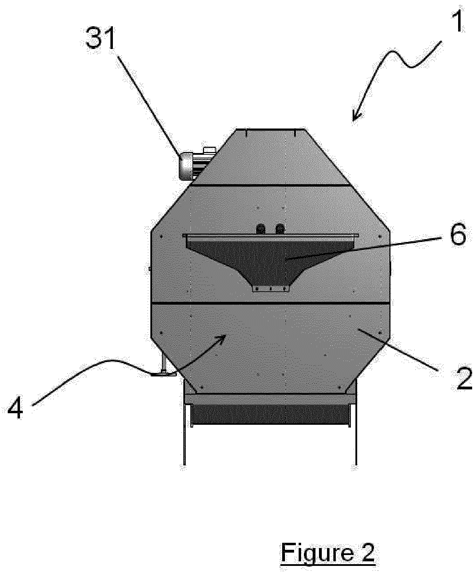

In some embodiments, (see figures 2, 4, and 12 for example) an external feed chute 6 is mounted to the main body 2 at the first end 4 thereof. The external feed chute 6 may be pivotally or removably mounted to the main body 2 such that the external feed chute 6 can be moved between an operative and an inoperative state. The external feed chute 6 has a proximal end which is mounted to the main body 2 and a distal end which opposes the proximal end - when the external feed chute 6 is in an operative state the external feed chute 6 extends away from the main body 2 such that the distal end of the external feed chute 6 is remote from the main body 2.

A width of the distal end of the external feed chute 6 is, in an embodiment, larger than a width of the external feed chute 6 towards the proximal end thereof. The external feed chute 6 has a main feed surface which is, when the external feed chute 6 is in the operative position, generally inclined with respect to an axis of the main body 2 of the apparatus 1 such that vegetables will tend to move along the main feed surface of the external feed chute 6 from the distal end thereof towards the proximal end thereof under the effect of gravity with the apparatus 1 in a normal or typical orientation.

The external feed chute 6 may include side walls which extend along respective side edges of the main feed surface of the external feed chute 6 (generally in an upward direction with the apparatus 1 in a normal or typical orientation with the external feed chute 6 in an operative position). Thus, the side walls help to direct vegetables along the main feed surface of the external feed chute 6 and help to prevent vegetables from falling off the external chute 6.

A feed aperture 7 is defined by the main body 2 of the apparatus 1 adjacent the proximal end of the external feed chute 6 and an internal feed chute 10 is positioned adjacent the feed aperture 7. The internal feed chute 10 extends away from the external feed chute 6 and has a main feed surface which is generally parallel to and aligned with the main feed surface of the external feed chute 6 when the external feed chute 6 is in the operative position.

The internal feed chute 10 is tubular in form and may have a square or rectangular internal cross-section. Accordingly, in addition to the main feed surface, the external feed chute 10 also has an upper feed surface which generally opposes the main feed surface across a height of the internal feed chute 10, a first side surface which connects two adjacent edges of the main and upper feed surfaces across a height of the internal feed chute 10, and a second side surface which connects another two adjacent edges of the main and upper surfaces across a height of the internal feed chute 10.

A first end of the internal feed chute 10 is located adjacent the feed aperture 7 and a second end of the internal feed chute 10 is located adjacent a bore 8 of a barrel 9 of the apparatus 1. The first and second ends of the internal feed chute 10 are open ends.

Thus, vegetables which are placed on the main feed surface of the external feed chute 6 will tend to travel, under the effect of gravity, towards the internal feed chute 10. The vegetables will tend to pass through feed aperture 7 and into the main body 2 of the apparatus. In particular, the vegetables will tend to travel over the main feed surface of the internal chute 10 from the first end of the internal chute 10 towards the second end of the internal chute 10. When vegetables reach the second end of the internal chute 10, they will tend to pass into the bore 8 of the barrel 9 - all under the effect of gravity. One or more fluid jets or sprays 65 may be provided to direct a flow of fluid - such as water - along the external chute 6 and through the internal chute 10 in the direction of travel of the vegetables in normal operation.

An external output chute 66 is provided in some embodiments (see figures 1, 3, 4, 12, and 16 - for example). The external output chute 66 is pivotally mounted to or removable from the main body 2 of the apparatus 1 and can adopt an operative and an inoperative position. The external output chute 66 is located at the second end 5 of the main body 2 of the apparatus 1 and extends away from the main body 2.

The external output chute 66 has a main guide surface which is generally aligned with a lower part of an end of the bore 8 of the barrel 9. Side guide surfaces may extend from opposing side edges of the main guide surface in a generally upwards direction with the apparatus 1 in a normal/typical orientation and with the external output chute 66 in the operative position.

Thus vegetables which pass through the bore 8 of the barrel 9 will be directed to the external output chute 66 which will act to guide the vegetables away from the apparatus 1.

The barrel 9 is rotatably mounted in the main body 2 of the apparatus 1 and extends toward the second end 5 of the main body 2 of the apparatus 1.

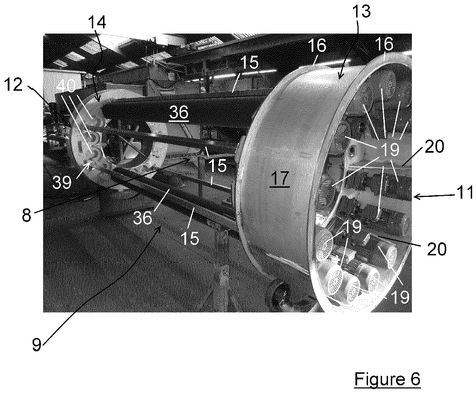

In some embodiments (see figures 6, 7, and 8 - for example), the barrel 9 comprises a framework with a generally cylindrical appearance. The barrel 9 has a first end 11 and a second end 12 which generally opposes the first end 11 across a length of the barrel 9.

The first end 11 of the barrel 9 is located towards the first end 4 of the main body 2 of the apparatus 1 and the second end 12 of the barrel 9 is located towards the second end 5 of the main body 2 of the apparatus 1.

One or more further fluid spray or jet arrangements 71,78 may extend from, for example, the first end 4 of the main body 2 into the bore 8 of the barrel 9 towards the second end 5 of the main body 2 of the apparatus 1. The or each further fluid spray or jet arrangement 71,78 may comprise a tube or other conduit configured to carry fluid. The tube or other conduit may be cantilevered from a first end thereof by attachment to the main body 2 of the apparatus. A second end of the tube or other conduit may be substantially unsupported by the main body 2 of the apparatus 1 (except via the first end thereof). The tube or other conduit may include one or more apertures 72 arranged such that fluid carried by the tube or other conduit is directed into the bore 8 of the barrel 9. A pump and/or fluid source or tank may be connected in fluid communication with the further fluid spray or jet arrangement 71,78. Accordingly, the further fluid spray or jet arrangement 71,78 may be configured for connection to the pump and/or fluid source which may or may not form part of the apparatus 1.

The barrel 9 has a first annular mounting member 13 located at the first end 11 of the barrel 9 and a second annular mounting member 14 located at the second end 12 of the barrel 9. A plurality of joists 15 extend between the first 13 and second 14 annular mounting members. The joists 15 support the first annular member 13 with respect to the second annular member 14.

In an embodiment, the joists 15 are substantially uniformly spaced around a circumference of the first 13 and second 14 annular members and have respective longitudinal axes which are generally parallel to each other (and parallel to a central longitudinal axis of the barrel 9). In an embodiment, there are six joists 15.

In an embodiment (see figures 6, 7, 8, 9, 10, 12, 13, andl5 -for example) the first annular mounting member 13 comprises a pair of outwardly extending flanges 16 mounted to respective opposing ends of a tubular member 17. Towards an inner end of the tubular member 17 is an inwardly extending radial flange 18 (which extends towards the central longitudinal axis of the barrel 9). A plurality of roller motors 19 are mounted to the inwardly extending radial flange 18. The roller motors 19 are preferably substantially evenly spaced around a circumference of the inwardly extending radial flange 18.

A body of each roller motor 19 extends towards the first end 11 of the barrel 9 and is generally contained, in an embodiment, within a volume defined by the tubular member 17.

A plurality of buttress members 20 may be provided which are fixedly secured to the inwardly extending radial flange 18 and an inner surface of the tubular member 17. The buttress members 20 are preferably substantially evenly spaced around a circumference of the tubular member 17 and are configured to support the tubular member 17 with respect to the inwardly extending radial flange 18.

In the depicted embodiment, two roller motors 19 are mounted between each two adjacent buttress members 20 but, of course, other arrangements are possible.

A saddle arrangement 21 of the first annular mounting member 13 is secured to the tubular member 17 and/or the inwardly extending radial flange 18 towards the second end 12 of the barrel 9 by one or more spacer members such that the saddle arrangement 21 is spaced apart from the inwardly extending radial flange 18. The saddle arrangement 21 comprises an annular disc mounted coaxially with the tubular member 17. The annular disc has a plurality of saddles 22 around a circumference thereof. The saddles 22 are spaced such that each saddle 22 is generally aligned with a respective rotor member 23 of each roller motor 19 (each rotor member 23 being configured to be driven in a rotational movement by its roller motor 19).

Each saddle 22 comprises a cut-out section of an outer edge of the annular disc extending inwardly. In other words, the saddle arrangement 21 appears to have a plurality of radially outwardly extending tongues and the space between each tongue comprises a saddle 22.

A roller seal lock arrangement 24 is provided for each saddle 22 as is more fully described below.

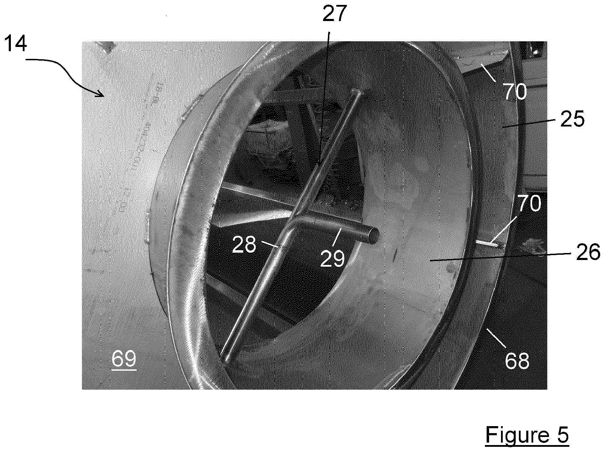

In an embodiment (see figures 5, 6, 12, 14, and 16 - for example) the second annular mounting member 14 comprises an outer tubular member 25 which is mounted coaxially to an inner tubular member 26 by a plate 69 and one or more spacers 70, wherein the central longitudinal axis of the barrel 9 is aligned with a central longitudinal axis of the outer 25 and inner 26 tubular members. A pair of outwardly extending flanges 68 is provided around opposing edges of the outer tubular member 26.

The second annular mounting member 14 further comprises a further saddle arrangement 39 which is substantially similar to the saddle arrangement 21 of the first annular mounting member 13. Accordingly, the further saddle arrangement 39 comprises a plurality of further saddles 40 of the same configuration as the saddles 22. In other words, the further saddle arrangement 39 comprises an annular disc which is coaxially mounted with the inner tubular member 26 and which includes a plurality of cut-out sections around a circumference thereof - to form a plurality of spaced tongues. The further saddles 40 are arranged such that they are each substantially aligned with a corresponding one of the saddles 21. Each of the further saddles 40 has a further roller seal lock arrangement which is substantially identical to the roller seal lock arrangement 24 described herein.

A T-shaped conduit 27 is mounted within the inner tubular member 16. The T-shaped conduit 27 comprises a first part 28 which is arranged across an internal diameter of the inner tubular member 16 and secured at its opposing ends to an inner surface of the inner tubular member 16 (this is the head of the T-shaped conduit 27). The T-shaped conduit 27 further comprises a second part 29 (the tail of the T-shaped conduit 27) which is aligned with the central longitudinal axis of the inner tubular member 16. The second part 29 of the T-shaped conduit 27 extends towards the second end 12 of the barrel 9.

A plurality of conductors is provided which extends through the T-shaped conduit 27 and is coupled to the roller motors 19. In particular, the conductors are configured to supply electricity to the roller motors 19.

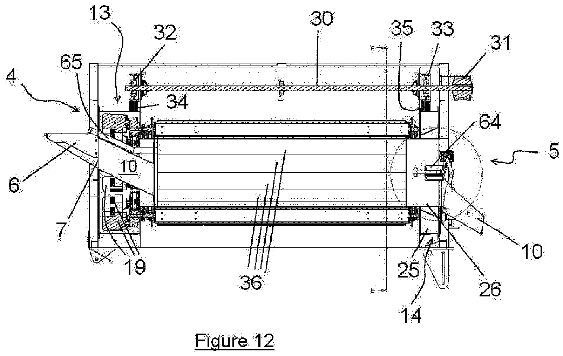

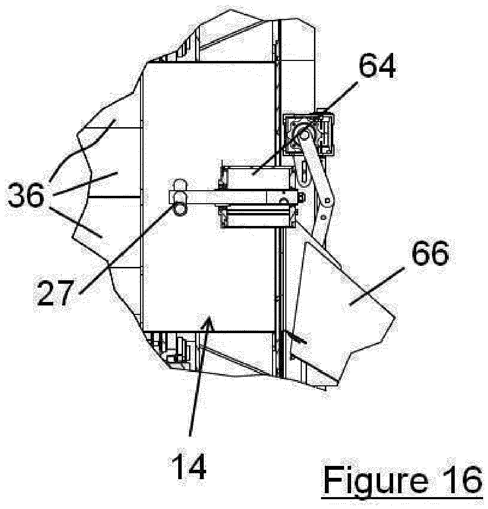

The second end 12 of the barrel 9 may be configured to be fitted to a slip ring arrangement 64 (see figures 12, and 16 - for example). The slip ring arrangement 64 has a first part which rotates with the barrel 9 and a second part which is fixedly secured to the main body 2 of the apparatus 1. The second part includes a plurality of terminals for connection to a power source. The first part is configured for a slipping arrangement with respect to the second part in a manner which substantially maintains an electrical contact between the first part and the second part. Thus, electrical power may be supplied to the second part of the slip ring arrangement 64 and transmitted to the roller motors 19 through the conductors even when the barrel 9 is rotating with respect to the main body 2 of the apparatus 1.

The first part of the slip ring arrangement 64 is preferably attached to a distal end of the second part 29 of the T-shaped conduit 27 and configured for rotational movement therewith. Therefore, in an embodiment, the second part 29 of the T-shaped conduit 27 must be substantially aligned with the slip ring arrangement 64. This alignment may be adjusted by adjusting the position of a barrel drive shaft 30 as described below. In addition, this alignment may be achieved by adjusting the position of the slip ring arrangement 64 as described below.

The main body 2 of the apparatus 1 includes the barrel drive shaft 30 which is preferably located in a position such that it is above the barrel 9 when the barrel 9 is mounted to the main body 2 of the apparatus 1 and the apparatus 1 is in a generally normal or typical orientation. The barrel drive shaft 30 generally extends along a length of the barrel 9 and has a central longitudinal axis which is generally parallel to the central longitudinal axis of the barrel 9. Furthermore, the barrel drive shaft 30 is mounted for rotation with respect to the main body 2 of the apparatus 1 around the central longitudinal axis of the barrel drive shaft 30.

A barrel drive motor 31 may be coupled to the barrel drive shaft 30 and configured to drive rotation of the barrel drive shaft 30 (see figure 12 - for example). The barrel drive motor 31 is, in an embodiment, mounted towards the second end 5 of the main body 2 of the apparatus 1 and may even be housed outside of a housing of the main body 2 of the apparatus 1. One or more gears (and/or belts and pulleys) may couple the barrel drive motor 31 to the barrel drive shaft 30.

A first barrel shaft pulley 32 is located towards the first end 11 of the barrel 9 and is mounted for rotation with the barrel drive shaft 30. A second barrel shaft pulley 33 is located towards the second end 12 of the barrel 9 and is also mounted for rotation with the barrel drive shaft 30.

One or more support elements and bearings 74 may be provided to support the barrel drive shaft 30 - the or each support element and bearing being provided along a length of the barrel drive shaft 30.

The barrel drive shaft 30 is, in an embodiment, mounted to the main body 2 of the apparatus 1 such that a distance between the central longitudinal axis thereof and a central longitudinal axis of the main body 2 of the apparatus 1 can be varied. In an embodiment, a distance between the central longitudinal axis of the barrel drive shaft 30 and the central longitudinal axis of the barrel 9 cannot be varied. As such, altering the position of the barrel drive shaft 30 with respect to the main body 2 will also alter the position of the barrel 9 with respect to the main body 2 in a corresponding manner. This variable mounting of the barrel drive shaft 30 with respect to the main body 2 may be achieved by the provision of one or more slotted supports 73 for the barrel drive shaft 30. The or each slotted support 73 may form part of the main body 2 of the apparatus 1. The barrel drive shaft 30 is mountable within the slot of the or each slotted support 73 at one of the plurality of different locations - each location being a different distance from the central longitudinal axis of the main body 2 of the apparatus 1. In an embodiment, the or each support element and bearing 74 is mountable at a plurality of different locations with respect to the slot of a respective slotted support 73.

The variable mounting of the barrel drive shaft 30 with respect to the main body 2 allows for alignment of the second part 29 of the T-shaped conduit 27 with the slip ring arrangement 64.

In an embodiment, the slip ring arrangement 64 is mounted to the main body 2 of the apparatus 1 by a variable position mounting arrangement 75 such that the position of the slip ring arrangement 64 with respect to the main body 2 can be varied. In an embodiment, the variable position mounting arrangement 75 includes a slotted mounting bracket which can be attached to the main body 2 by an attachment (such as a nut and bolt) received by the slot and secured to the main body 2.

The variable mounting of the slip ring arrangement 64 to the main body 2 of the apparatus 1, allows for further alignment of the second part 29 of the T-shaped conduit 24 with the slip ring arrangement 64.

The barrel 9 is, therefore, in an embodiment rotatably mountable to the main body 2 of the apparatus 1 through the use of a first drive belt or chain 34 which extends around the first barrel drive shaft pulley 32 and around at least part of the circumference of the barrel 9, and a second drive belt or chain 35 which extends around the second barrel drive shaft pulley 33 and around at least part of the circumference of the barrel 9. One or more bearings may also be provided to couple the barrel 9 or a part thereof to the main body 2 of the apparatus 1. The first and second barrel drive shaft pulleys 32,33 may be sprockets.

In an embodiment, the first and second drive belts or chains 34,35 extend around the tubular member 17 of the first annular mounting member 13 and the outer tubular member 25 of the second annular mounting member 14 respectively. It will be appreciated that the first and second barrel drive shaft pulleys 32,33 will be arranged to permit this to occur and may each be substantially aligned with and/or adjacent a respective one of the tubular member 17 and the outer tubular member 25.

Accordingly, the barrel drive motor 31 may drive rotation of the barrel drive shaft 30 which causes rotation of the barrel drive shaft pulleys 32,33 which, in turn, causes movement of the first and second drive belts or chains 34,35 which act to rotate the barrel 9 with respect to the main body 2 of the apparatus 1.

One or more removable rollers 36 are provided according to an embodiment of the present invention.

Each removable roller 36 comprises a roller core 37 to which is attached as a roller material 38. In an embodiment, the roller material 38 comprises a plurality of brush bristles such that the roller 36 may generally be described as a roller brush. The roller material 38 may be selected for the task to which the apparatus is to be applied - as will be appreciated - and could take many different forms according to various embodiments of the present invention. Each roller 36 is elongate in form and has a length such that the roller 36 many be rotatably mounted to a saddle 22 of the saddle arrangement 21 of the first annular mounting member 13 and a further saddle 40 of the further saddle arrangement 39 of the second annular mounting member 14 with a longitudinal axis of the roller 36 being substantially parallel to the central longitudinal axis of the barrel 9.

Each roller 36 may comprise a plurality of roller segments. Each roller segment comprises a body having a length which is less than the length of the roller 36. Each roller segment may comprise an annular roller core segment configured to be mounted on a roller axle such that the roller axle extends substantially through the entire length of the roller 36 and is received by each annular roller core segment. The circumferential edges of each annular roller core segment may be keyed. This keyed arrangement is configured to restrict rotational movement of one annular roller core segment with respect to another annual roller core segment of the same roller 36. Thus, as will be appreciated a roller 36 may be formed from a plurality of annual roller core segments mounted on a roller axle.

The roller material 38 may comprise one or more brush bristles. The length, flexibility, hardness, width, and/or shape of the roller material 38 and parts thereof (such as individual bristles) may be selected according to the application to which the roller 36 is to be put to use. The roller material 38 may be a carborundum abrasive material. In an embodiment, the roller material 38 of a roller 36 along a length and/or around part of the roller 36 differs from the roller material along another length and/or around another part of a roller 36.

The or each roller 36 may be a roller substantially as disclosed in UK Patent No. 2420693 in the name of Tickhill Engineering Company Limited.

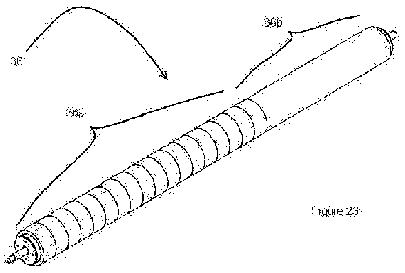

In embodiments (see figure 23), the or each roller 36 may include at least two parts: a first part 36a extending along a first length of the roller 36 and a second part 36b extending along a second length of the roller distinct from the first length of the roller 36. The roller material 38 along the first part 36a of the roller 36 may include a plurality of bristles. The roller material 38 along the second part 36b of the roller 36 may include a water absorbent material which is configured to dry vegetables or other articles. The water absorbent material may include a plurality of annular segments. The water absorbent material may include an open cell sponge material. The water absorbent material may include a felt. The water absorbent material may include non-woven fibres. The water absorbent material may include a hydrophilic material or a material with a hydrophilic coating.

A first end 41 of each roller 36 is mounted to the first annular mounting arrangement 13 and a second end 42 of each roller is mounted to the second annular mounting arrangement 14.

A first roller shaft member extends from the first end 41 of each roller 36 and a second roller shaft member extends from the second end 42 of each roller 36.

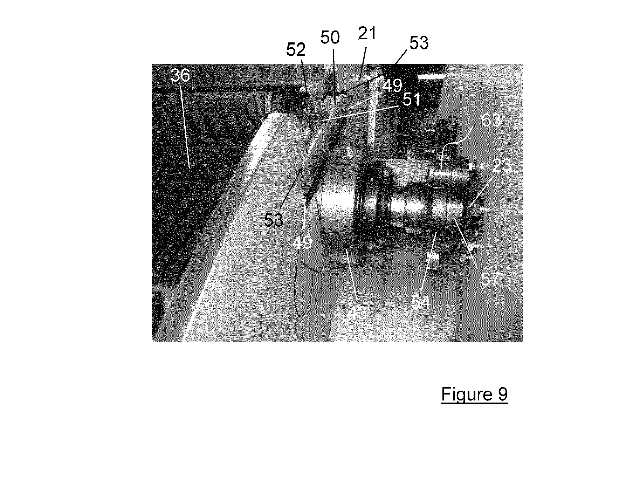

A roller bearing and sealing member 43 is provided according to an embodiment (see figures 9, 10, and 11 - for example). The roller bearing and sealing member 43 defines an aperture 44 which is adapted to receive the first roller shaft member such that the first roller shaft member extends therethrough.

The roller bearing and sealing member 43 comprises a mounting ring 45 in which is secured a sleeve 46. The sleeve 46 has a greater length than the ring 45 and extends out of the volume defined thereby in at least a first direction. The sleeve 46 defines at least part of the aperture 44 through the member 43. The sleeve 46 is attached to the mounting ring 45. An annular cap 76, preferably constructed out of metal, is provided at an end of the aperture 44 opposing the sleeve 46 and also defines at least part of the aperture 44. A valve 47 or grease nipple is provided and is in fluid communication with an inner part of the roller bearing and sealing member 43. The valve 47 or grease nipple may be mounted on the ring 45. In operation, the first roller shaft member is inserted into the aperture 44 so that it extends therethrough. Grease, oil, or another water repellent lubricating fluid may be delivered to an inner part of the member 43 within the aperture 44. It will be understood, therefore, that the roller bearing and sealing member 43 hinders the transmission of, for example, contaminant material through the roller bearing and sealing member 43. The sleeve 47 may be a bellows-type sealing member.

The roller bearing and sealing member 43 has a circumferential groove 48 which is of a size suitable to receive an edge of the annular disc of the saddle arrangement 21. The roller bearing and sealing member 43 may, therefore, be fitted to the saddle arrangement 21 by aligning the groove 48 with the annular disc and placing the member 43 in one of the saddles 22 of the saddle member 21. The annular disc of the saddle arrangement 21 will be partially received by the groove 48.

The roller seal lock arrangement 24 may then be used to secure the roller bearing and sealing member 43 to the saddle member 21 to prevent, substantially, removal thereof. The roller seal lock arrangement 24 is further configured to limit or prevent substantially movement of the roller bearing and sealing member 43 with respect to the saddle member 21 (including rotational movement). The roller seal lock arrangement 24 may comprise, in an embodiment, a pair of opposing recesses 49 in the saddle 22 and a cross-bar 50 configured to be received at either end thereof by the pair of opposing recesses 49. The cross-bar 50 defines a threaded aperture 51 therethrough. A bolt 52, with a corresponding thread, may be passed through the threaded aperture 51 to bring an end of the bolt 52 into engagement with a surface of the roller bearing and sealing member 43. The threads of the threaded aperture 51 therefore engage the threads of the bolt 52 to hold the bolt 52 in engagement with the roller bearing and sealing member 43, thus securing the member 43 in place. The threaded aperture 51 may comprise a nut which is separate from the cross-bar 50 (as in the depicted embodiment). Accordingly, the corresponding aperture through the cross-bar 50 may not be provided with a thread.

The cross-bar 50 may further comprise elongate grooves 53 in the opposing ends thereof which are sized to receive an edge of the annular disc of the saddle arrangement 21 in the region of the pair of opposing recesses 49 such that the cross-bar 21 is inhibited from rotational movement with respect to the saddle arrangement 21 when fitted as discussed above.

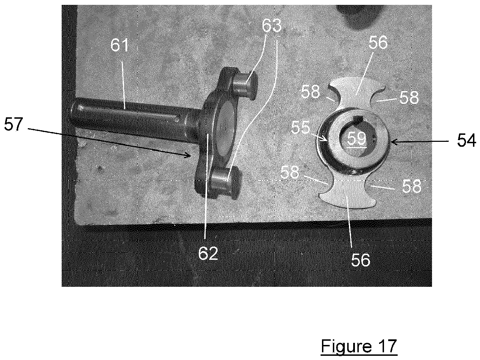

The first roller shaft member of each roller 36 is configured to be coupled to a rotor coupling member 54 which is adapted for rotation with the first roller shaft member (see figure 17 - for example).

The rotor coupling member 54 includes a mating arrangement 55 which is configured to mate with the first roller shaft member. The mating arrangement 55 may comprise a keyed aperture 59 defined by the rotor coupling member 54 and configured to received the first roller shaft member.

The rotor coupling member 54 has a pair of abutment members 56 which extend radially away from the mating arrangement 55 and generally oppose each other across a diameter of the rotor coupling member 54.

Each abutment member 56 has a pair of curved recesses 58 which oppose each other across a width of the abutment member 56. The abutment members 56 form a coupling arrangement of the rotor coupling member 54 which is configured to couple with a corresponding coupling arrangement of a rotor driving element 57.

A plurality of rotor driving elements 57 (see figure 17 - for example) are provided and each of the rotor driving elements 57 is configured to be connected to one of the rotor members 23 and may, in an embodiment, be integrally formed therewith. The rotor driving element 57, in an embodiment, comprises a keyed shaft 61 configured to be connected to a correspondingly keyed part of one of the rotor members 23. Mounted on the keyed shaft 61 is an end plate 62 which is mounted for rotation with the keyed shaft 61 and which generally has a main plane which is perpendicular to a longitudinal axis of the keyed shaft 61. A pair of protrusions 63 extends from the end plate 62 in a direction which is generally parallel to the longitudinal axis of the keyed shaft 61 and away from the keyed shaft 61.

Each of the pair of protrusions 63 is configured to abut against respective ones of the curved recesses 58 of the abutment member 56 of one of the rotor coupling member 54. Thus, the rotor driving element 57 can be engaged with the rotor coupling member 54 such that rotation of the rotor driving element 57 (which may be driven by a roller motor 19) drives rotation of the rotor coupling member 54 (through abutment of the pair of protrusions 63 with the curved recesses 58) which, in turn, drives rotation of the first roller shaft member and a roller 36.

It will be appreciated that a change in the direction of rotation of the rotor member 23 of a roller motor 19 will cause the rotor driving element 57 connected thereto, to rotate with respect to the rotor coupling member 54 until the pair of protrusions 63 abut against others of the curved recesses 58 of the abutment member 56 before the rotor coupling member 54 is rotationally driven in the new direction.

A roller bearing and sealing member 43 may also be provided to mount the second roller shaft member of a roller 36 to one of the further saddles 40 in a corresponding manner to that described above in relation to the first roller shaft member and the saddles 22. Of course, motors are not provided in the second annular mounting member 14, therefore, the above described features which couple the first roller shaft members of the rollers 36 to the rotor members 23 of the roller motors 19 need not be provided.

Thus, in accordance with embodiments of the present invention is possible to fit one or more rollers 36 to the apparatus 1 using the features discussed above.

The apparatus 1 may include one or more body panels which may be partly removable to allow access to the barrel 9 - for example.

In operation, vegetables may be fed onto the external feed chute 6. The vegetables will pass over the external feed chute 6 to the internal feed chute 10 from which the vegetables will enter the bore 8 of the barrel 9. The plurality of rollers 26 are rotated and water (or another fluid) may be provided (through one or more spray units) to polish the vegetables.

At least partly under the effect of gravity the vegetables will move from the first end of the apparatus 1 to the second end of the apparatus 1 over the rollers 36. The barrel 9 will be rotated during this procedure as will the rollers 36. Because each roller 36 is connected to its own roller motor 19 it is possible to rotate some rollers 36 at a different rate or in a different direction with respect to the other rollers 36.

The complex belt arrangement of many prior art vegetable polishers is not required and, as such, the apparatus 1 of embodiments requires less frequent maintenance.

Embodiments of the present invention include a control unit. The control unit is coupled to the roller motors 19 and may also be coupled to the barrel drive motor 31. The control unit may include a user interface through which a user can enter commands into the control unit.

The control unit is configured to control the operation of the apparatus 1. Accordingly, the control unit may be configured to control the speed and/or direction of rotation of the rollers 36 with respect to the barrel 9 by control of the supply of electrical power to the roller motors 19. The control unit may be configured to control each roller 36 independently of the other rotors 36, or may be configured to control the rotors 36 in groups (each group comprising one or more rotors 36). More generally, the control unit may be configured to control one roller 36 independently of at least one other roller 36 of the apparatus 1. The control unit may be further configured to control the speed and/or direction of rotation of the barrel 9 with respect to the main body 2 of the apparatus 1.

It will be apparent that embodiments of the present invention may include a single roller motor 19 which is coupled to more than one roller 36 and configured to drive rotation thereof.

The roller motor or motors 19 are carried by the barrel 9 such that the roller motors 19 rotate with the barrel 19 and drive rotation of one or more rollers 36 with respect to the barrel 9.

Vegetables which embodiments of the present invention may be configured to polish and clean may include carrots, potatoes, beetroot, parsnips, swedes, and celeriac. Articles which embodiments of the present invention may be configured to polish and/or clean may include plastic/glass/metal packaging, scrap plastic/glass/metal, and the like - such as bottles, cans, bags, boxes, containers, and the like.

In an embodiment, the barrel 9 is configured to receive a plurality of rollers 36. In an embodiment, the barrel 9 is configured to receive eight rollers 36. In an embodiment, the barrel 9 is configured to receive twenty five rollers 36. In an embodiment, the barrel 9 is configured to receive between eight and twenty five rollers 36. It will be appreciated that the number of saddles 21 and further saddles 40 provided may be selected to allow the barrel 9 to receive a predetermined number of rollers 36.

It will be appreciated that the roller motors 19 may include one or more gears. It will be appreciated that roller motors 19 may, in accordance with an embodiment be provided to be coupled to both the first 41 and second 42 ends of each roller 36. Accordingly, a mechanical power transmission arrangement may be provided to mechanically couple the rotor member 23 of a roller motor 19 to the second end 42 of one of the rollers 36. Of course, the same arrangement is possible for a plurality of the rollers 36. In an embodiment, further roller motors are provided at the second end 12 of the barrel 9 such that each roller 36 is coupled to two roller motors (one at each end thereof).

It will be understand that, according to embodiments, the rollers 36 are configured for rotation with respect to the barrel 9 independently of the rotation of the barrel 9 with respect to the main body 2 of the apparatus.

According to embodiments, one or more wheels or trunnions may be provided to support at least part of the weight of the barrel 9. The one or more wheels or trunnions are generally provided such that they are beneath at least part of the barrel 9 when the apparatus 1 is in a normal or typical orientation. The one or more wheels or trunnions may drive rotational movement of the barrel 9 with respect of the main body 2.

One or more further wheels or trunnions 77 are provided according to embodiments of the present invention (the one or more further wheels or trunnions 77 may be provided in addition to or in the absence of the one or more wheels or trunnions discussed above). The or each further wheel or trunnion 77 is positioned to hinder or substantially prevent movement of the barrel 9 with respect to the main body 2 of the apparatus 1 other than rotational movement. For example, a further wheel or trunnion 77 may be provided to hinder or substantially prevent lateral movement of the barrel 9 with respect to the main body 2 of the apparatus 1 in a first direction. In an embodiment, four such further wheels or trunnions are provided 77. The or each further wheel or trunnion 77 may be configured to abut against the first 13 and/or second 14 annular mounting member. In an embodiment, a plurality of further wheels or trunnions 77 are provided in respective pairs wherein each pair of further wheels or trunnions 77 applies a force to the barrel 9 in a generally opposing direction.

It will be appreciate that the or each wheel or trunnion, and/or the or each further wheel or trunnion 77 is rotatable with respect to the main body 2 of the apparatus 1 and may be configured for free rotation therewith.

The or each roller 36 has generally been described herein as removable. According to embodiment, a part of the or each roller 36 is removable. According to embodiments, the or each roller 36 is provided in cartridge form to permit ready removal and replacement.

The or each roller motor 19 may be a shaft mounted motor, and/or an inline geared motor.

According to embodiments, other arrangements are provided to drive rotational movement of the barrel 9 with respect to the main body 2 of the apparatus 1. For example, rotation of the barrel 9 may be driven by a plurality of barrel drive motors, or rotation of the barrel 9 may be driven from one end of the barrel only.

According to an embodiment, the or each roller motor 19 and/or the barrel drive motor 31 comprises a hydraulic motor. Accordingly, the barrel drive motor 31 may be provided with a supply of fluid under pressure (such as hydraulic fluid), the fluid pressure and/or flow rate may be controlled by an actuator (such as a spool value) to moderate and control the speed of rotation at which the barrel drive motor 31 drives rotation of the barrel 9. Similarly, a supply of fluid under pressure may be provided to the or each roller motor 19. The fluid pressure and/or flow rate may be controlled by an actuator (such as a spool value) to moderate and control the speed of rotation at which the or each roller 36 is driven by the or each roller motor 19. In some such embodiments, the slip ring arrangement 64 described herein may be replaced by a fluid delivery arrangement.

Such a fluid arrangement may comprise an arrangement which has a first part which is coupled to the main body 2 of the apparatus 1 and which is in fluid communication with a second part thereof, wherein the second part is configured to rotate with respect to the main body 2 of the apparatus 1. The second part is configured to be coupled in fluid communication with the second part 29 of the T-shaped conduit 27. The first part is configured to be coupled to a fluid source such that fluid can be delivered into the T-shaped conduit 27 through the fluid delivery arrangement.

The supply of electrical power to the or each motor 19,31 may be controlled by an inverter which may be part of a converter. The speed of rotation of the rotor member 23 of each roller motor 19 and/or the barrel drive shaft 30 may be controlled by a mechanical variator - for example.

A first inverter may be provided for the or each roller motor 19 and a second inverter may be provided for the barrel drive motor 31.

It will be understood that the or each roller motor 19 is coupled to the barrel 9. The or each roller 36 is attachable to the barrel 9 such that the or each roller 36 is removable from the barrel 9 independently from the or each roller motor 19. Accordingly, one or more rollers 36 can be removed from the barrel 9 without decoupling the associated roller motor 19 from the barrel 9. Each roller 36 is, therefore, removably coupled to a roller motor 19 according to embodiments of the invention. It will further be understood that the a rotor of the or each roller motor 19 is configured to be coupled (e.g. removably) to the or each roller 36 and a stator of the or each roller motor 19 is configured to be coupled to the barrel 9 (e.g. in a fixed rotational relationship with respect thereto).

In embodiments in which a roller 36 is provided which has a length which includes a water absorbent material, barrel 9 may include a drying roller arrangement 100. The drying roller arrangement 100 may be mounted towards the second end 12 of the barrel 9. In embodiments, the drying arrangement 100 is substantially aligned with the second part of the roller 36.

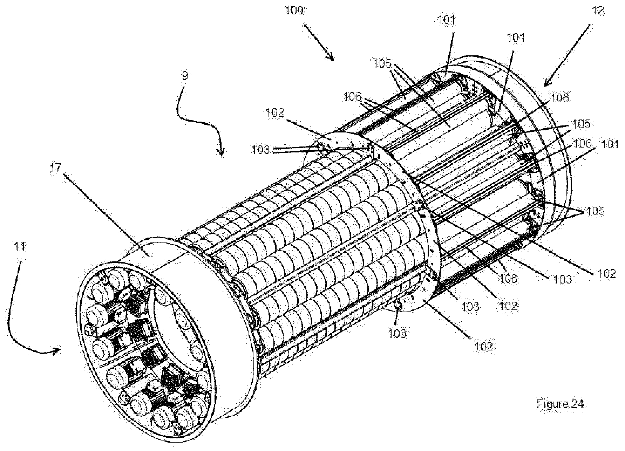

An example of the drying roller arrangement 100 is shown in figure 24.

The drying roller arrangement 100 may comprise a plurality of first arcuate sections 101 which collectively surround at least a portion of a circumference of the barrel 9. In embodiments, the first arcuate sections 101 surround an entire circumference of the barrel 9. The first arcuate sections 101 are located towards the second end 12 of the barrel 9 in embodiments.

The drying roller arrangement 100 may comprise a plurality of second arcuate sections 102 which collectively surround at least a portion of a circumference of the barrel 9. In embodiments, the second arcuate sections 102 surround an entire circumference of the barrel 9. The second arcuate sections 101 are spaced apart from the first arcuate sections 101 by a length of the drying roller arrangement 100.

The provision of arcuate sections 101,102, as will be appreciated, allows for sections of the drying roller arrangement 100 to be dismantled independently of other sections for ease of maintenance.

In embodiments, the arcuate sections 101,102 form a pair of annular rings. The arcuate sections 101,102 form flanges which extend radially from the barrel 9.

Brackets 103 may be provided to couple each arcuate section 101,102 to its neighbouring section 101,102. Each bracket 103 may be configured to be secured to a joist 15 of the barrel 9.

Each arcuate section 101,102 includes one or more support brackets 104 configured to support a respective press roller 105. The support brackets 104 are arranged to support a press roller 15 between the first and second arcuate sections 101,102 such that a longitudinal axis of the press roller 105 is substantially parallel to the longitudinal axis of the rollers 36.

The or each support bracket 104 is arranged such that the press roller 105 supported thereby is in contact, in use, with at least one roller 36 and, in particular, with at least part of a length of the roller 36 which includes a water absorbent material.

The or each press roller 105 is configured to collect water from the roller 36. Accordingly, the press roller 105 may be formed (at least in part) by a water absorbent material. In embodiments, the press roller 105 is formed from a substantially rigid axle which supported a tube of water absorbent material. The water absorbent material of the press roller 105 may have an open or closed cell structure. The or each press roller 105 and the associated support bracket or brackets 104 are configured to permit rotation of the or each press roller 105 with respect to the barrel 9. Rotation of a press roller 105 may be driven by a roller 36 with which the press roller 105 is in contact.

In embodiments, the water absorbent material of the press roller 105 may be compressible and the support brackets 104 may be configured to support a press roller 105 with respect to a roller 36 such that the water absorbent material of the press roller 105 is at least partially compressed by the roller 36. As will be appreciated, as material of the press roller 105 expands during rotation of the press roller 105 away from the region of contact with the roller 36, the material of the press roller 105 will more readily absorb water from the associated roller 36.

The distance of the or each press roller 105 with respect to the or each associated roller 36 may be varied by adjustment of the coupling between the press roller 105 and the support brackets 104. A slot may be provided in the support brackets 104 to allow for such movement.

In embodiments, the or each press roller 105 is associated with at least one scraper 106. The or each scraper 106 is configured to remove water from the associated press roller 105. A scrapper 106 may be associated with more than one press roller 105. However, in embodiments, one scraper 106 is provided for each press roller 105.

The or each scraper 106 is attached to one or both of a first and a second arcuate section 101,102. The or each scrapper 106 may be attached such that a longitudinal axis of the scrapper 106 is parallel with a longitudinal axis of the associated press roller or rollers 105. The or each scrapper 106 is supported such that a length of the scrapper 106 is in contact with the or each associated press roller 105.

The or each press roller 105 rotates with respect to the associated scraper or scrappers 106 (if provided). In embodiments, the or each scraper 106 is configured to aid in the extraction of water from the associated press roller or rollers 105. In embodiments, the water is then permitted to travel downwards under the effect of gravity to a drain - not shown. The or each scraper 106 may include a channel to direct the flow of water along a part of the scraper 106 for better drainage.

In embodiments, the or each scrapper 106 is supported such that a compressive force is applied to the associated press roller or rollers 105 by the or each scrapper 106. This may aid in the extraction of water from the or each press roller 105.

In embodiments, the or each scraper 106 has a T-shaped cross-section. In embodiments, the or each scrapper 106 includes a rubber (or synthetic rubber) member configured for contact with the press roller 105. In embodiments, the scrapper 106 includes a plurality of such members.

An aspect of the present invention provides a drying apparatus for vegetables or other articles, the apparatus comprising: a main body; a barrel rotatably mounted with respect to the main body and defining a bore therethrough for the receipt of one or more articles to be dried; a first roller motor mounted to the barrel and configured to be carried by the barrel; and a first roller rotatably mounted with respect to the barrel and carried by the barrel, the first roller being coupled to the first roller motor, such that the first roller is rotatably driveable with respect to the barrel by the first roller motor, the first roller including a water absorbent material and being positioned with respect to the bore of the barrel such that the roller is operable to dry one or more articles received by the bore defined by the barrel.

It will be appreciated that the cleaning apparatus 1 disclosed herein could equally be a drying apparatus or a cleaning and drying apparatus. The description in relation to the cleaning apparatus 1 applies equally to a drying apparatus and to a cleaning and drying apparatus.

As used herein "cleaning" may include polishing, scrubbing, washing, rinsing, and the like.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A cleaning and/or drying apparatus for vegetables or other articles, the apparatus comprising:
a main body;
a barrel rotatably mounted with respect to the main body and defining a bore therethrough for the receipt of one or more articles to be cleaned and/or dried;
a first roller motor mounted to the barrel and configured to be carried by the barrel; and
a first roller rotatably mounted with respect to the barrel and carried by the barrel, the first roller being removably coupled to the first roller motor, such that the first roller is rotatably driveable with respect to the barrel by the first roller motor, the first roller being positioned with respect to the bore of the barrel such that the roller is operable to clean and/or dry one or more articles received by the bore defined by the barrel.

2. An apparatus according to claim, further comprising: one or more further roller motors mounted to the barrel and configured to be carried by the barrel, and one or more further rollers, wherein the or each further roller motor is coupled to one or more of the further rollers and configured to drive rotational movement of the one or more further rollers with respect to the barrel.

3. An apparatus according to claim 2, wherein at least one of the further roller motors is controllable independently of the first roller motor to drive movement of the or each further roller coupled to the at least one further roller motor at a different rotational speed and/or in a different direction of rotation to the rotational speed and/or direction of rotation of the first roller.

4. An apparatus according to claim 1 or 2, further comprising:
a barrel drive motor configured to drive rotational movement of the barrel with respect to the main body; OR
a barrel drive motor configured to drive rotational movement of the barrel with respect to the main body, wherein the or each roller motor is controllable independently of the barrel drive motor.

5. An apparatus according to claim 4, wherein the barrel drive motor is connected to a barrel drive shaft and the barrel drive shaft is configured to transfer rotational movement from the barrel drive motor to the barrel.

6. An apparatus according to claim 5, wherein the barrel drive shaft is moveable between at least two positions with respect to the main body, and wherein the barrel is suspended from the barrel driveshaft.

7. An apparatus according to any preceding claim, further comprising:
a slip ring arrangement to deliver electrical power to the or each roller motor from a power source; OR
a slip ring arrangement to deliver electrical power to the or each roller motor from a power source, wherein the slip ring arrangement is secured to the main body by a variable mounting arrangement such that the position of the slip ring arrangement with respect to the main body is variable.

8. An apparatus according to any of claims 1 to 7, further comprising:
a fluid delivery arrangement to deliver fluid under pressure to the or each roller motor from a fluid source; OR
a fluid delivery arrangement to deliver fluid under pressure to the or each roller motor from a fluid source, wherein the fluid delivery arrangement is secured to the main body by a variable mounting arrangement such that the position of the fluid delivery arrangement with respect to the main body.

9. An apparatus according to any preceding claims, further comprising a fluid delivery arrangement configured to deliver fluid to the bore of the barrel.

10. An apparatus according to any preceding claim, wherein the or each roller has a longitudinal axis which is substantially parallel to a longitudinal axis of the barrel.

11. An apparatus according to any preceding claim, further comprising a roller bearing and sealing arrangement configured to mount the first roller to a part of barrel, the roller bearing and sealing arrangement being configured to receive a part of the roller.

12. An apparatus according to claim 11, wherein the roller bearing and sealing arrangement comprises a bellows-type seal.

13. An apparatus according to any preceding claim, further comprising a press roller which is mounted with respect to the barrel and carried by the barrel, the press roller being in contact with the first roller such that water from the first roller is transferable, during use, to the press roller.

14. An apparatus according to claim 13, wherein the press roller is rotatably mounted with respect to the barrel.

15. An apparatus according to claim 14, further comprising a scraper carried by the barrel and mounted to contact at least part of the press roller, the scrapper being configured to aid in the extraction of water from the press roller.
